# EUROPEAN PATENT SPECIFICATION

(11) **EP 2 930 276 B1**
(45) Date of publication and mention of the grant of the patent: **28.12.2022**
(21) Application number: 15160340.4
(22) Date of filing: 23.03.2015
(51) Int. Cl.: E03B 11/02, B65D 8/00

(54) **PRESSURE TANK FOR DRINKING WATER**
DRUCKBEHÄLTER FÜR TRINKWASSER
RÉSERVOIR SOUS PRESSION POUR L'EAU POTABLE

(30) Priority: 27.03.2014 SE 1450355
(43) Date of publication of application: 14.10.2015
(73) Proprietor: Aqua Expert AB, 35245 Växjö (SE)
(72) Inventor: HÖJER, Martin, 35243 Växjö (SE)
(74) Representative: AWA Sweden AB

(56) References cited:
- EP-A1- 1 894 855
- EP-A1- 2 244 047
- CN-U- 202 000 404
- DE-A1- 19 818 709
- DE-U1-202004 008 670
- GB-A- 490 201
- SE-B- 392 794
- US-A- 2 209 663
- US-A- 2 696 323
- US-A- 2 971 671
- US-A- 5 465 863

## Description

### Technical field

The present invention relates to a pressure tank for drinking water configured for operation as a hydrophore tank, according to the preamble of claim 1, said tank having a cylindrical mantle, a first end section and a second end section. Further, it relates to a kit for assembling such a pressure tank according to the preamble of claim 12.

### Background

Systems for supplying drinking water to, e.g., homes, especially those supplying homes outside of built-up areas, often include a pressure tank. This tank may operate as a hydrophore tank, i.e., function as container of pressurized water, which acts as a reservoir of pressurized water and is connected to the water conduit system of the home in question. A pump is connected to the hydrophore tank and pumps water to the hydrophore tank from, e.g., a drilled well. Using the hydrophore tank, a pressure is achieved in the water conduits which will vary between pre-set pressures for the pump to turn on or off. Thanks to the hydrophore tank, the pump will not need to start every time a water tap is opened in the water conduit system.

A hydrophore is disclosed in SE392794B.

A system for supplying drinking water may also comprise a filter tank which is filled with a suitable filtering material, e.g., sand or activated carbon, and which filters water from, e.g., a well before the water is forwarded to a water conduit system.

DE 20 2004 008 670 U1 describes a water softening installation. The installation comprises a pressure tank. <Insert Page 1a>

### Summary

It is an object of the present invention to produce a pressure tank for drinking water which is more efficient in transport and manufacture than pressure tanks for drinking water known in the prior art.

This object is achieved through a pressure tank according to claim 1.

An example of a plastic container for storage and transport of large volumes of a liquid media, such as rainwater, is disclosed in DE 198 18 709 A1.

An example of a container with segmental construction for storage of large volumes of a liquid is disclosed in EP 2 244 047 A1.

An example of a water tank made of a plastic material, which water tank is formed by joining at least two open tank parts with opened end structures, is disclosed in EP 1 894 855 A1.

An example of a recyclable container made of metal for storage of a liquid or semiliquid material, which can be extracted from the container by use of a plunger, is disclosed in US 5 465 863 A.

An example of a metal container for transport of a liquid material, where the container has been reinforced to prevent bulging is disclosed in GB 490 201 A.

An advantage of this pressure tank for drinking water is that it allows for considerable freedom of assembling; it may for example be assembled with the cylindrical mantle oriented differently depending on whether the pressure tank for drinking water will be used as a pressure tank for drinking water and/or filter tank for drinking water. Another advantage is that the interior of the pressure tank for drinking water is very easily accessible for cleaning. Should any part of the pressure tank for drinking water be damaged, only that part will need to be replaced, while the undamaged part of the filer tank may be kept.

In an embodiment, the cylindrical mantle has at its first end a first mantle flange pointing outwards, and at its second end a second mantle flange pointing outwards, and wherein the first end section has a first end flange pointing outwards, which flange is adapted to the first and second mantle flanges, and the second end section has a second end flange pointing outwards, which flange is adapted to the first and the second mantle flanges. An advantage with this embodiment is that the flanges make it easy to mount any end section on any end of the cylindrical mantle.

At least the first end section has a curved first center section, whose outer diameter FYD is equal to or less than the inner diameter MID of the mantle, wherein the first end section may be positioned with the whole of the first center section inside the mantle in a transport configuration. Therefore, the tank for drinking water has a very small transport volume, making transport inexpensive and efficient.

According to an embodiment, the other end section has a curved second center section, whose outer diameter AYD is equal to or less than the inner diameter MID of the mantle, wherein both the first and the second end sections may be placed with the whole of their respective curved center sections inside the mantle in a transport configuration. This allows for an exceptionally small transport volume, resulting in efficient and inexpensive transport.

According to an embodiment, the pressure tank for drinking water has a first fixation device which is arranged to fasten the first end section on either one of the first or the second cylinder end openings, and a second fixation device which is designed to fasten the second end section on either one of the first or the second cylinder end openings. An advantage of this embodiment is that the end sections may be attached to any cylinder end opening in an easy way.

According to an embodiment, at least one of the first and the second fixation devices has a V-shaped inner side and is designed to push with this inner side on, respectively, a first mantle flange pointing outwards being located on the mantle and a first or second end flange located on the first or second end flange against each other to clamp a sealing device located between the first mantle flange and the first or the second end flange, for example an O-ring. An advantage of this embodiment is that the end sections may be efficiently attached on the mantle with the help of the fixation devices, and that these at the same time ensure efficient sealing of the end sections against the mantle.

According to an embodiment, at least one of the first or the second fixation devices is a clamping ring with at least two parts. An advantage of this embodiment is that the fixation devices are inexpensive to make and easy to assemble and disassemble.

According to an embodiment, at least one of the first and the second fixation devices are designed to fasten an end section on the mantle both in a transport configuration and in an operative configuration. An advantage of this embodiment is that few parts are needed, since the fixation device also functions as a transport locking device.

According to an embodiment, at least one of the first and the second fixation devices has been constructed to yield to overpressure in the pressure tank for drinking water. An advantage of this embodiment is that there is no need for a separate relief valve, since this feature is achieved through at least one of the fixation devices. Thus, the fixation device will additionally serve as relief valve. An efficient design with few parts is thus achieved, lowering cost. The fixation device may, e.g., be designed to yield when the pressure inside the pressure tank for drinking water exceeds a pre-determined security value, and this pre-determined security value may, e.g., be somewhere in the interval 5-25 bars (absolute pressure).

According to an embodiment, the pressure tank for drinking water further comprises a first sealing ring for sealing a gasket space between the first cylinder end opening and optionally the first or the second end section, and a second sealing ring for sealing a gasket space between the second cylinder end opening and optionally the first or the second end section. An advantage of this embodiment is that sealing rings allow for efficient sealing between either of the respective end sections and the mantle. According to a preferred embodiment, either of the sealing rings may be an O-ring. An advantage of this embodiment is that O-rings allow for efficient and safe sealing at low cost.

According to an embodiment, the pressure tank for drinking water comprises at least a first circular seal bracket which is located inside the pressure tank for drinking water, and which on its outside supports a first sealing, e.g., a first O-ring, positioning this first sealing in a gasket space formed between the first cylinder end opening and optionally the first or the second end section. An advantage of this embodiment is the ease of assuring that the first sealing, e.g., a first O-ring, is correctly positioned in the gasket space when assembling the pressure tank for drinking water. According to a preferred embodiment the pressure tank for drinking water comprises a first seal bracket located at the first cylinder end opening and a second sealing bracket located at the second cylinder end opening. An advantage of this embodiment is that it allows for very easy assembling of the pressure tank for drinking water. According to an embodiment, the seal bracket has a seal seating for the first sealing. The seating keeps the sealing in place during assembling of the pressure tank, and keeps the seal bracket in place in the tank after the assembling of the tank.

According to an embodiment, a valve connection socket, connected to the interior of the mantle, is attached on the mantle close to the first end. An advantage of this embodiment is that the pressure tank for drinking water easily may be connected to a water conduit system. The mantle may be positioned with either end pointing upwards, i.e., with the valve connection socket close to the floor or far from the floor, for the best adaptation to the intended function, e.g., as a filter tank or only as a pressure tank.

According to an aspect, the present invention relates to a system for supplying drinking water, comprising a pressure tank for drinking water according to any one of the embodiments described above, which is configured to operate as a hydrophore tank in the system for supplying drinking water. An advantage of this is the provision of an inexpensive and easily cleaned system for supplying drinking water.

According to an aspect, the present invention relates to a system for supplying drinking water, comprising a pressure tank for drinking water according to any one of the embodiments described above, which is configured to operate as a filter tank for drinking water in the system for supplying drinking water. An advantage of this is the provision of a system for supplying drinking water that has a water filter that is inexpensive and in which the filtering material is easy to replace.

According to another aspect, the present invention relates to a system for supplying drinking water, comprising a pressure tank for drinking water according to any one of the embodiments described above, which is configured to operate as both a hydrophore tank and as a filter tank for drinking water in the system for supplying drinking water. An advantage of this is the provision of a system for supplying drinking water that is easy to maintain and has few parts.

Further advantages and characteristics of the invention will be evident from the description below and the claims following thereafter.

### Brief description of the drawings

The invention will in the following be described with the help of example embodiments with reference to the attached drawings.
Fig. 1 is an exploded view showing parts comprising a pressure tank for drinking water.
Fig. 2a is a three-dimensional view showing the pressure tank of Fig. 1 in a transport configuration.
Fig. 2b is a cross-sectional view of the pressure tank in transport configuration.
Fig. 2c is an enlargement of a clamping ring holding the pressure tank together in transport configuration.
Fig. 3 is a cross-sectional view showing a sealing device which is part of the pressure tank for drinking water.
Fig. 4a is a three-dimensional view showing the pressure tank for drinking water configured to operate as a pressure tank and as a filtering device.
Fig. 4b shows the flow of water in the pressure tank when it is configured to operate as a filtering device.
Fig. 5a is a three-dimensional view showing the pressure tank for drinking water configured to operate as a hydrophore tank.
Fig. 5b shows the flow of water in the pressure tank configured to operate as a hydrophore tank.

### Description of preferred embodiments

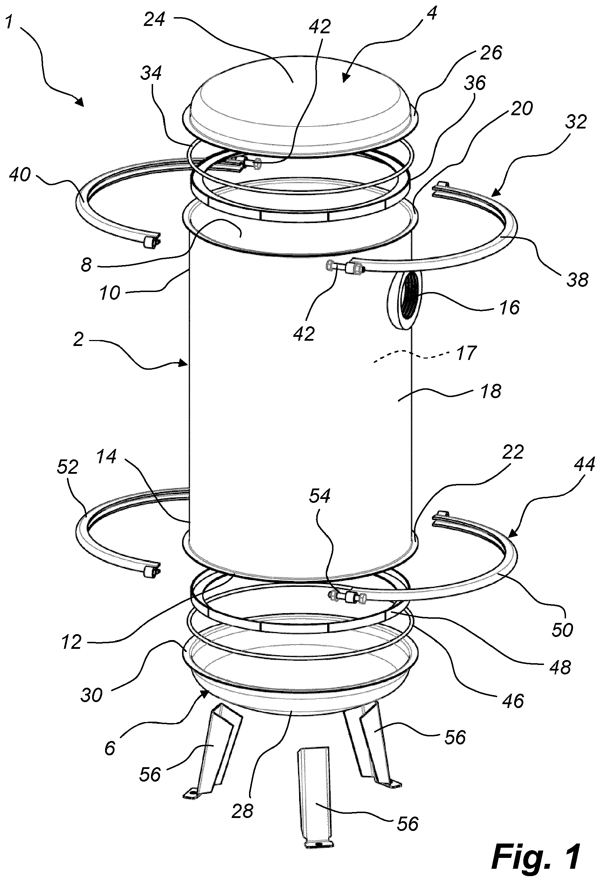

Fig. 1 shows a pressure tank for drinking water 1, whose main parts are a cylindrical mantle 2, a first round end section 4, and a second round end section 6.

The mantle 2 has a first cylinder end opening 8, which is located in a first end 10 of the mantle 2, and a second cylinder end opening 12, which is located in an opposite end 14 of the mantle 2. A valve connection socket 16, connected to the interior 17 of the mantle 2, is mounted in the side plate 18 of the mantle 2 close to the first end 10.

The first cylinder end opening 8 is surrounded by a first mantle flange 20 pointing outwards, located in the first end 10, and the other cylinder end opening 12 is surrounded by a second mantle flange 22 pointing outwards, located in the second end 14.

The first end section 4 comprises a curved first center section 24 and a first end flange 26 pointing outwards, located around the first center section 24. In a similar way, the second end part 6 comprises a curved second center section 28 and a second end flange 30 pointing outwards, located around the second center section 28.

For the purpose of attaching the first end section 4 to the mantle 2, the pressure tank 1 furthermore is provided with a first fixation device, which in this embodiment is a first clamping ring 32, a first O-ring 34, and a first O-ring bracket 36. The clamping ring 32 has a first ring half 38 and a second ring half 40 and each of these is provided with a respective bolt joint 42 for joining the two halves 38, 40.

In the same way, the pressure tank 1 is also provided with a second fixation device, which in this embodiment is a second clamping ring 44, a second O-ring 46, and a second O-ring bracket 48, for the purpose of attaching the second end section 6 to the mantle 2. The clamping ring 44 has a first ring half 50 and a second ring half 52 and each of these is provided with a respective bolt joint 54 for joining the two halves 50, 52.

The first end section 4 is arranged to be detachably mounted on either of the first or the second cylinder end openings 8, 12 using the first clamping ring 32, and the second end section 6 is arranged to be detachably mounted on either of the first or the second cylinder end opening 8, 12 using the second clamping ring 44.

Furthermore, the pressure tank 1 may be provided with supporting legs, in Fig. 1 illustrated with three supporting legs 56. These legs 56 may be mounted on the tank 1, e.g., on the second end section 6, using bolts, a setup using grooves, or by any other suitable means (not shown in detail in Fig. 1).

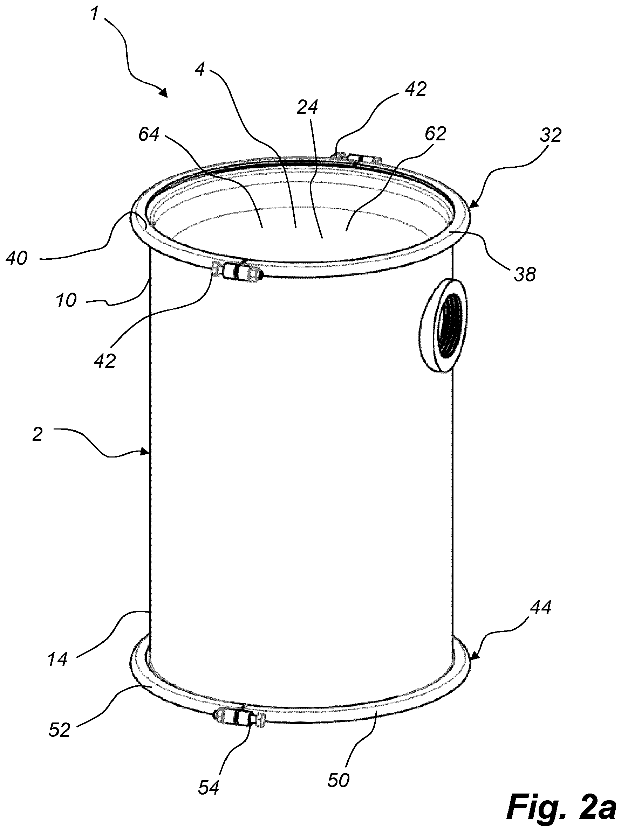

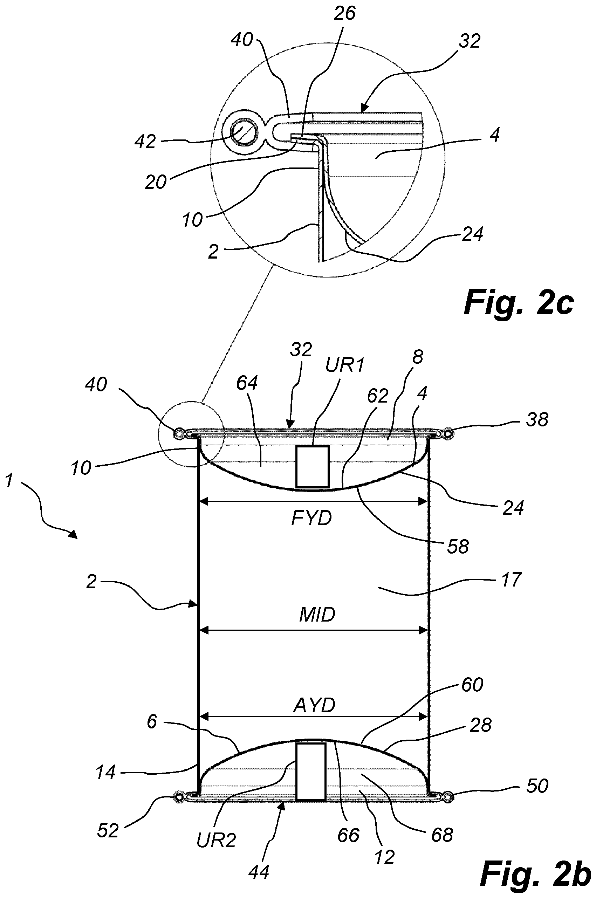

Figs. 2a-2c show the pressure tank for drinking water 1 in a transport configuration. In this configuration, the tank 1 takes up very little space, resulting in a low transport volume and low transport cost. Fig. 2a shows the tank 1 in transport configuration in a perspective view, and Fig. 2b shows the tank 1 in a cross-sectional view. Fig. 2c is an enlargement illustrating how the tank 1 is mounted in the transport configuration.

Figs. 2a and 2b show how the first end section 4 has been placed in the first cylinder end opening 8 of the mantle 2, it having been turned so that the outside 58 of its curved first center section 24 is pointed toward the interior 17 of the mantle 2. As is best seen in Fig. 2b, the second end section 6 has been placed in the second cylinder end opening 12 of the mantle 2 and has been turned with the outside 60 of its curved second center section 28 pointed toward the interior 17 of the mantle 2.

This transport configuration is possible thanks to the outer diameter FYD of the first center section 24 being equal to, or somewhat less than, the inner diameter MID of the mantle 2, as well as the outer diameter AYD of the second center section 28 being equal to, or somewhat less than, the inner diameter MID of the mantle 2, i.e., FYD, AYD =< MID. Because of this, each of the respective center sections 24, 28 of the end sections 4, 6 may fit inside the mantle 2.

The first clamping ring 32 has been mounted in the first end 10 of the mantle 2 using the bolt joints 42, which hold the first and the second ring halves 38, 40 together. Similarly, the second clamping ring 44 has been mounted in the second end 14 of the mantle 2 using the bolt joints 54, which hold the first and the second ring halves 50, 52 together.

Fig. 2c shows how the first clamping ring 32 encloses the first mantle flange 20 pointing outwards of the mantle 2 and the first end flange 26 pointing outwards of the first end section 4, thereby attaching the first end section 4 on the mantle 2. In this configuration, no O-ring or other gasket is used to seal the first end section 4 against the mantle 2, and this is not needed in the transport configuration. The principle shown in Fig. 2c is also used in the way that the second clamping ring 44 fastens the second end section 6 on the mantle 2.

As is schematically shown in Figs. 2a and 2b, the inside 62 of the first curved center section 24 of the first end section 4 forms, in the transport configuration, a space 64 where equipment, schematically shown in Fig. 2b as a part UR1, may be stored during transport of the pressure tank 1. In the same way, the inside 66 of the curved second center section 28 of the second end section 6 forms a space 68 where equipment, schematically shown in Fig. 2b as a part UR2, may be stored during transport of the pressure tank 1.

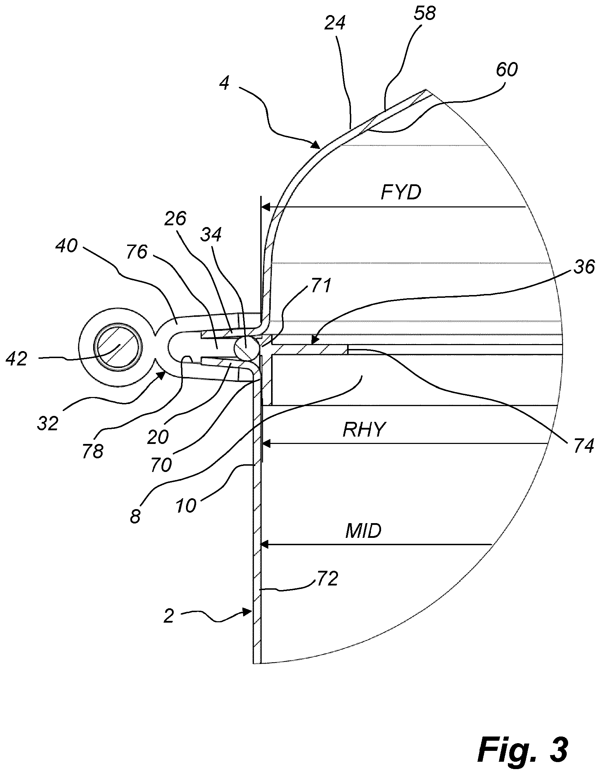

Fig. 3 shows how the first end section 4 has been mounted on the first cylinder end opening 8 at the first end 10 of the mantle 2 when then pressure tank for drinking water 1 has been mounted in a operative configuration. As can be seen in Fig. 3, and as has already been discussed in conjunction with Fig. 2b, the outer diameter FYD of the center section 24 is equal to, or somewhat less than, the inner diameter MID of the mantle 2, i.e., FYD =< MID.

The first O-ring bracket 36 has an outer diameter RHY which is equal to, or somewhat less than, the inner diameter MID of the mantle 2, i.e., RHY =< MID. The fist O-ring bracket 36 has an outside 70 that is essentially parallel to the inner wall 72 of the mantle 2, and a central opening 74 allowing water to freely flow past the central part of the O-ring bracket 36. The O-ring bracket 36 has on its outside 70 a seal seating 71 intended for an O-ring. The first O-ring 34 extends around the seal seating 71 located on the outside 70 of the O-ring bracket 36 and is at least partially located in a first gasket space 76 formed between the first mantle flange 20 pointing outward of the mantle 2 and the first end flange 26 pointing outward of the first end section 4. The clamping ring 32 has been mounted using the bolt joint 42 so that the ring halves 38 and 40, of which only the ring half 40 is visible in the perspective view of Fig. 3, have been pushed together.

As can be seen in Fig. 3, the ring half 40 is V-shape on its inner side 78, which means that, as the clamping ring 32 is tightened, the inside 78 of the ring half 40 will push the mantle flange 20 and the end flange 26 against each other so that these two will clamp the O-ring 34 located in the gasket space 76 between themselves with increasing force the more the clamping ring 32 is tightened, thereby ensuring efficient sealing between the mantle 2 and the first end section 4. Thanks to the seating 71, the O-ring bracket 36 will be kept in place in the tank 1 by the O-ring 34, which in turn is locked in place in the gasket space 76.

The clamping ring 32 also functions as a relief valve. The clamping ring 32 has been designed with a suitable strength so that the clamping ring 32 will yield and lose its sealing force if there is excess pressure inside the pressure tank 1. Thereby, possible excess pressure will in that case be released through the gasket space 76. The clamping ring 32 may, e.g., be constructed to yield when the pressure inside the pressure tank for drinking water 1 exceeds a pre-determined security value, this pre-determined security value, e.g., being somewhere in the interval 5-25 bars (absolute pressure).

The other clamping ring 44 will, in a fashion similar to what is shown in Fig. 3, ensure sealing between the mantle 2 and the second end section 6.

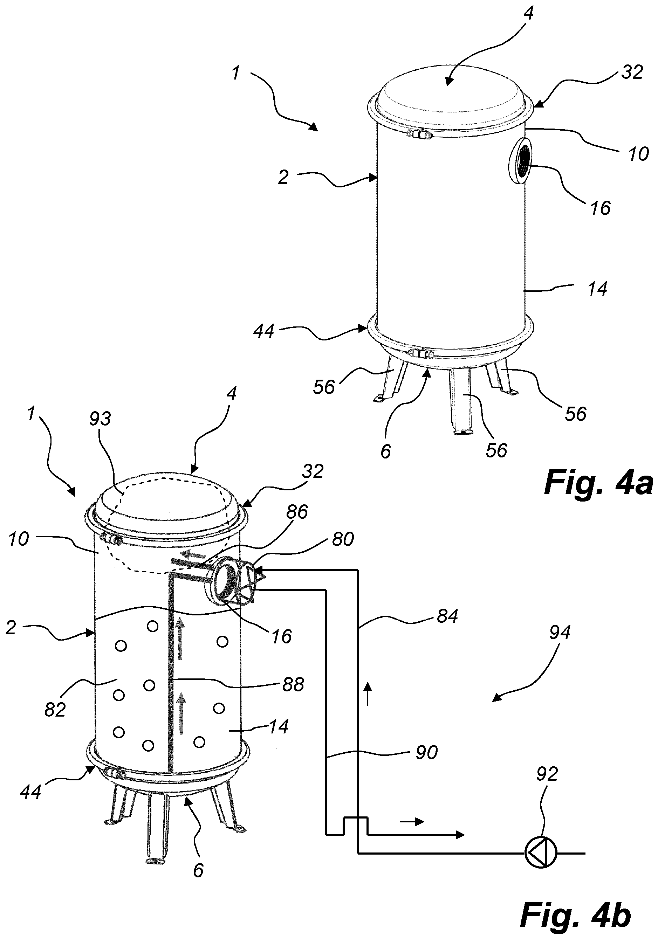

Fig. 4a shows the pressure tank for drinking water 1 when it has been installed to be used as a pressure tank and as a filtering device. In this mode of operation, the mantle 2 has been oriented so that the first end 10 of the mantle is facing upwards, and the second end 14 of the mantle is facing downwards, resulting in that the valve connection socket 16, which is located close to the first end 10, will be located in the upper end of the pressure tank 1. The first round end section 4 has been mounted in the first end 10 of the mantle 2 with the aid of the first clamping ring 32 according to the principle described in Fig. 3, and the second round end section 6 has been mounted on the second end 14 of the mantle 2 according to the same principle. Thereafter, three supporting legs 56 have been mounted on the second round end section 6 so that the pressure tank 1 may be placed on the ground with the mantle 2 in a vertical direction.

Fig. 4b shows the mode of operation of the pressure tank for drinking water 1 when it has been installed to be used as a pressure tank and as a filtering device to be part of a system for supplying drinking water 94. A schematically shown manual filter valve 80 has been mounted on the valve connection socket 16. The manual filter valve 80 may, e.g., be of the type "Manual Multi-Port Valve for Water Treatment Systems (TMF56A)", which is manufactured by Wenzhou Runxin Manufacturing Machine Co., Ltd., Wenzhou, China. This valve allows an inflow and an outflow to pass separately through the common valve connection socket 16. Naturally, it is also possible to mount other types of valves, including automatic and/or electronically controlled valves.

A filtering material 82, which, e.g., may contain sand, activated carbon, zeolites, or other filtering substances, and also mixtures of these materials, has been added inside the pressure tank 1 to a level just below the valve connection socket 16. The manual filter valve 80 is connected to a feeder conduit 84 and a distributor pipe 86, and is also connected to a collecting pipe 88 and a drinking water conduit 90. The feeder conduit 84 carries water, for example water from a drilled well (not shown), to the filter valve 80, which in turn carries the water on to the distributor pipe 86, which distributes the water over the filtering material 82. The water then continues vertically down through the filtering material 82 and is during this passage cleansed from impurities. The purified water is collected in the collecting pipe 88 and is carried to the filter valve 80, which, without letting the pure water come into contact with the water in the feeder conduit 84, carries the water on to the drinking water conduit 90 and further on to different points of consumption, e.g., a kitchen, a shower, a wash basin, etc., on a premises. The feeder conduit 84 may be connected to a pump 92, which generates a water pressure in the pressure tank 1 and which contributes to the functioning of the pressure tank both as a filter tank and as a hydrophore tank, which both purifies the water and generates the water pressure needed for the water to be easily drawn from taps, shower nozzles, etc.

Thanks to the clamping rings 32, 44, the pressure tank 1 may be easily cleaned by removing one or both of the end sections 4, 6 from the mantle 2 when it is time to replace and/or clean the filtering material 82.

When the pressure tank for drinking water 1 is to be used as a filter tank, it is normally advantageous to place the valve connection socket 16 at a high location, since it often is suitable to let an air bubble 93 exist in the upper part 1 of the tank, so that the water is saturated with oxygen before it is filtered. The tank 1 will need to be back-flushed with some regularity, whereby water is pumped in a direction opposite to what is shown in Fig. 4b, to remove impurities which have been accumulating in the filtering material 82. With the valve connection socket 16 at a high location, as is shown in Fig. 4b, the air bubble 93 located in the upper part of the tank 1, i.e., below the first end section 4, will remain during such back-flushing.

In the configuration shown in Figs. 4a-4b, the pressure tank for drinking water is used both as a hydrophore tank and as a filter tank.

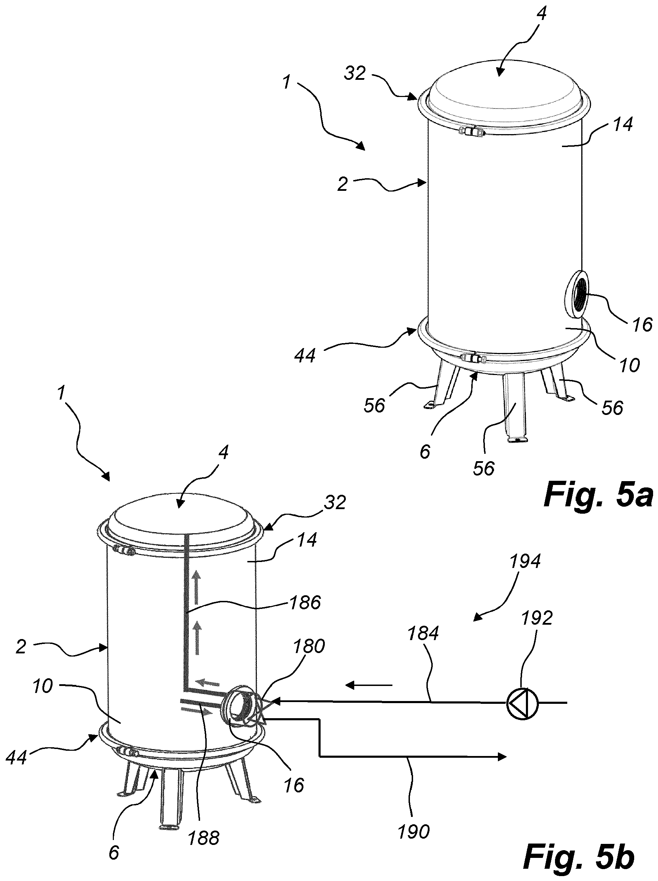

Fig. 5a shows the pressure tank for drinking water 1 after it has been assembled to be used only as a hydrophore tank. In this mode of operation, the mantle 2 has been positioned so that the first end 10 of the mantle 2 is facing downwards, and that the second en 14 of the mantle is facing upwards, resulting in that the valve connection socket 16, which is located close to the first end 10, will be located in the lower end of the pressure tank 1. The first round end section 4 has been mounted on the second end 14 of the mantle 2 using the first clamping ring 32 according to the principle described in Fig. 3, and the second round end section 6 has been mounted on the first en 10 of the mantle 2 using the second clamping ring 44 according to the same principle. Thereafter, three supporting legs 56 have been mounted on the second round end section 6 so that the pressure tank 1 may be placed on the ground with the mantle 2 in a vertical direction.

Fig. 5b shows the mode of operation for the pressure tank for drinking water 1 when it has been mounted to only be used as a hydrophore tank, forming part of a system for supplying drinking water 194. A schematically shown manual distributor valve 180 has been mounted on the valve connection socket 16. The manual distributor valve 180 may be of the same type as the valve 80 mentioned above. The manual distributor valve 180 is connected to a feeder conduit 184 and to a distributor pipe 186, and is also connected to an outlet pipe 188 and a drinking water conduit 190. A pump 192 pressurizes and transports drinking water, via the feeder conduit 184, to the distributor valve 180, which carries the water to the distributor pipe 186. The distributor pipe 186 releases the water into the upper part of the pressure tank 1, close to the first round end section 4. When water is to be drawn from the pressure tank 1, it is carried out from the pressure tank 1 through the outlet pipe 188. The outlet pipe 188 has its mouth located in the opposite end of the tank 1, viz., in the vicinity of the other round end section 6, as compared to the end where the distributor pipe 186 has its mouth, and therefore the water in the tank 1 will be mixed every time someone draws water. The water is thus carried from the outlet pipe 188, through the valve 180 and the drinking water conduit 190, and further on to the different points of consumption, e.g., a kitchen, a shower, a wash basin, etc., on a premises. When the pressure tank for drinking water only will be used a hydrophore tank, it is normally advantageous to place the valve connection socket 16 at as low a level as possible, since this results in comparatively short water conduits.

Thanks to the clamping rings 32, 44, the pressure tank 1 may easily be disassembled during possible cleaning or inspection.

It is easily understood that the present invention may be realized in alternative ways, within the scope of the following claims.

Above, both the inflow and the outflow of the tank 1 have been described as going through a single valve connection socket 16. Is can be understood that it is also possible to design a tank outlet and a tank inlet with are separate from each other. These inlets or outlets may be located in the mantle 2, and/or in any of the end sections 4, 6, or in both.

Above, the end sections 4, 6 have been described as being virtually identical in design. It is also possible to design the two end sections 4, 6 so that they are different. The first end section 4 may, e.g., be provided with connectors for supplying air and/or an inlet for a liquid, and the second end section 6 may be provided with fastening means for the supporting legs 56, or be provided with permanently mounted supporting legs.

## Claims

1. A pressure tank for drinking water (1) configured for operation as a hydrophore tank, said tank having a cylindrical mantle (2), a first end section (4), and a second end section (6), said cylindrical mantle (2) having a first cylinder end opening (8) located in a first end (10) of said mantle (2), and a second cylinder end opening (12) located in an opposite end (14) of said mantle (2), wherein said first end section (4) is detachably mounted on any one of said first or said second cylinder end openings (8, 12), and wherein said second end section (6) is detachably mounted on any one of said second or said first cylinder end openings (12, 8), **characterized in that** at least said first end section (4) has a curved first center section (24), whose outer diameter (FYD) is equal to or less than the inner diameter (MID) of said mantle (2), wherein said first end section (4) may be positioned with the whole of said curved first center section (24) inside said mantle (2) in a transport configuration.

2. A pressure tank for drinking water (1) according to claim 1, wherein said cylindrical mantle (2) at its said first end (10) has a first mantle flange (20) pointing outwards, and at its said second end (14) a second mantle flange (22) pointing outwards, and wherein said first end section (4) has a first end flange (26) pointing outwards, said flange being adapted to said first and said second mantle flanges (20, 22), and said second end section (6) has a second end flange (30) pointing outwards, said flange being adapted to said first and said second mantle flanges (20, 22).

3. A pressure tank for drinking water (1) according to any one of the preceding claims, wherein said second end section (6) has a curved second center section (28), whose outer diameter (AYD) is equal to or less than said inner diameter (MID) of said mantle (2), wherein both said second and said first end section (4, 6) may be placed with the whole of their said respective curved center sections (24, 28) inside said mantle (2) in a transport configuration.

4. A pressure tank for drinking water (1) according to any one of the preceding claims, having a first fixation device (32) which is arranged to fasten said first end section (4) on any one of said first or said second cylinder end openings (8, 12), and a second fixation device (44) which is arranged to fasten said second end section (6) on any one of said first and said second cylinder end openings (8, 12).

5. A pressure tank for drinking water (1) according to claim 4, wherein at least one of said first and said second fixation devices (32, 44) has a V-shaped inner side (78) and is arranged to push, using said inner side (78), on, respectively, a first mantle flange (20) pointing outwards located on said mantle (2) and on a first or a second end flange (26, 30) located on said first or said second end sections (4, 6) against each other to clamp a sealing device (34), for example an O-ring, located between said first mantle flange (20) and said first or said second end flanges (26, 30).

6. A pressure tank for drinking water (1) according to any one of claims 4-5, wherein at least one of said first and said second fixation devices comprises a clamping ring (32, 44) constructed with a suitable strength so as to yield and lose its sealing force if the pressure inside the pressure tank exceeds a pre-determined security value.

7. A pressure tank for drinking water (1) according to any one of the preceding claims, wherein said pressure tank for drinking water (1) further comprises a first sealing ring (34) for sealing a gasket space (76) between said first cylinder end opening (8) and optionally said first or said second end section (4, 6), and a second sealing ring (46) for sealing a gasket space (76) between said second cylinder end opening (12) and optionally said first or said second end section (4, 6).

8. A pressure tank for drinking water (1) according to any one of the preceding claims, comprising at least a first circular seal bracket (36), which is located inside said pressure tank for drinking water (1), and which in its outside (70) supports a first sealing (34), such as a first O-ring, and positions said first sealing (34) in a gasket space formed between said first cylinder end opening (8) and optionally said first or said second end opening (4, 6).

9. A pressure tank for drinking water (1) according to any one of the preceding claims, wherein a valve connection socket (16), being connected to the interior (17) of said mantle (2), is mounted on said mantle (2) close said the first end (10).

10. A system (94, 194) for supplying drinking water, **characterized by** comprising a pressure tank for drinking water (1) according to any one of the preceding claims, which is configured to operate as a hydrophore tank in said system for supplying drinking water (94, 194).

11. A system (94) for supplying drinking water, **characterized by** comprising a pressure tank for drinking water (1) according to any one of the preceding claims 1-9, which is configured to operate as a filter tank in said system for supplying drinking water (94).

12. A kit for assembling a pressure tank for drinking water (1), said pressure tank being configurable for operation as a hydrophore tank, said kit comprising a cylindrical mantle (2), a first end section (4), and a second end section (6), said cylindrical mantle (2) having a first cylinder end opening (8) located in a first end (10) of said mantle (2), and a second cylinder end opening (12) located in an opposite end (14) of said mantle (2), wherein said first end section (4) is arranged to be detachably mounted on any one of said first or said second cylinder end openings (8, 12), and wherein said second end section (6) is arranged to be detachably mounted on any one of said second or said first cylinder end openings (12, 8), **characterized in that** at least said first end section (4) has a curved first center section (24), whose outer diameter (FYD) is equal to or less than the inner diameter (MID) of said mantle (2), wherein said first end section (4) may be positioned with the whole of said curved first center section (24) inside said mantle (2) in a transport configuration.

## Patentansprüche

1. Drucktank für Trinkwasser (1), der zum Betreiben als ein Hydrophorentank konfiguriert ist, wobei der Tank einen zylindrischen Mantel (2), eine erste Endsektion (4) und eine zweite Endsektion (6) aufweist, wobei der zylindrische Mantel (2) eine erste Zylinderendöffnung (8), die in einem ersten Ende (10) des Mantels (2) angeordnet ist, und eine zweite Zylinderendöffnung (12), die in einem entgegengesetzten Ende (14) des Mantels (2) angeordnet ist, aufweist, wobei die erste Endsektion (4) abnehmbar an einer beliebigen von der ersten oder der zweiten Zylinderendöffnung (8, 12) angebracht ist und wobei die zweite Endsektion (6) abnehmbar an einer beliebigen von der zweiten oder der ersten Zylinderendöffnung (12, 8) angebracht ist, **dadurch gekennzeichnet, dass** zumindest die erste Endsektion (4) eine gekrümmte erste Mittelsektion (24) aufweist, deren Außendurchmesser (FYD) gleich dem Innendurchmesser (MID) des Mantels (2) oder geringer als derselbe ist, wobei in einer Transportkonfiguration die erste Endsektion (4) mit der Gesamtheit der ersten gekrümmten Mittelsektion (24) innerhalb des Mantels (2) angeordnet sein kann.

2. Drucktank für Trinkwasser (1) nach Anspruch 1, wobei der zylindrische Mantel (2) an seinem ersten Ende (10) einen ersten Mantelflansch (20) aufweist, der nach außen zeigt, und an seinem zweiten Ende (14) einen zweiten Mantelflansch (22) aufweist, der nach außen zeigt, und wobei die erste Endsektion (4) einen ersten Endflansch (26) aufweist, der nach außen zeigt, wobei der Flansch an den ersten und den zweiten Mantelflansch (20, 22) angepasst ist, und die zweite Endsektion (6) einen zweiten Endflansch (30) aufweist, der nach außen zeigt, wobei der Flansch an den ersten und den zweiten Mantelflansch (20, 22) angepasst ist.

3. Drucktank für Trinkwasser (1) nach einem der vorhergehenden Ansprüche, wobei die zweite Endsektion (6) eine gekrümmte zweite Mittelsektion (28) aufweist, deren Außendurchmesser (AYD) gleich dem Innendurchmesser (MID) des Mantels (2) oder geringer als derselbe ist, wobei in einer Transportkonfiguration sowohl die zweite als auch die erste Endsektion (4, 6) mit der Gesamtheit ihrer jeweiligen gekrümmten Mittelsektionen (24, 28) innerhalb des Mantels (2) platziert sein kann.

4. Drucktank für Trinkwasser (1) nach einem der vorhergehenden Ansprüche, der eine erste Befestigungseinrichtung (32), die dafür angeordnet ist, die erste Endsektion (4) an einer beliebigen von der ersten oder der zweiten Zylinderendöffnung (8, 12) zu befestigen, und eine zweite Befestigungseinrichtung (44), die dafür angeordnet ist, die zweite Endsektion (6) an einer beliebigen von der ersten oder der zweiten Zylinderendöffnung (8, 12) zu befestigen, aufweist.

5. Drucktank für Trinkwasser (1) nach Anspruch 4, wobei mindestens eine von der ersten und der zweiten Befestigungseinrichtung (32, 44) eine V-förmige innere Seite (78) aufweist und dafür angeordnet ist, unter Verwendung der inneren Seite (78), jeweils auf einen ersten Mantelflansch (20), der nach außen zeigt, wobei er an dem Mantel (2) angeordnet ist, beziehungsweise auf einen ersten oder einen zweiten Endflansch (26, 30), der an der ersten oder der zweiten Endsektion (4, 6) angeordnet ist, gegeneinander zu drücken, um eine Abdichtungseinrichtung (34), zum Beispiel einen O-Ring, festzuklemmen, die zwischen dem ersten Mantelflansch (20) und dem ersten oder dem zweiten Endflansch (26, 30) angeordnet ist.

6. Drucktank für Trinkwasser (1) nach einem der Ansprüche 4 bis 5, wobei mindestens eine von der ersten und der zweiten Befestigungseinrichtung einen Klemmring (32, 44) umfasst, der mit einer geeigneten Festigkeit konstruiert ist, um nachzugeben und seine Abdichtungskraft zu verlieren, falls der Druck innerhalb des Drucktanks einen vorbestimmten Sicherheitswert überschreitet.

7. Drucktank für Trinkwasser (1) nach einem der vorhergehenden Ansprüche, wobei der Drucktank für Trinkwasser (1) ferner einen ersten Dichtungsring (34) zum Abdichten eines Dichtungsraums (76) zwischen der ersten Zylinderendöffnung (8) und wahlweise der ersten oder der zweiten Endsektion (4, 6) und einen zweiten Dichtungsring (46) zum Abdichten eines Dichtungsraums (76) zwischen der zweiten Zylinderendöffnung (12) und wahlweise der ersten oder der zweiten Endsektion (4, 6) umfasst.

8. Drucktank für Trinkwasser (1) nach einem der vorhergehenden Ansprüche, der mindestens eine erste kreisförmige Dichtungshalterung (36) umfasst, die innerhalb des Drucktanks für Trinkwasser (1) angeordnet ist und die in ihrer Außenseite (70) eine erste Dichtung (34), wie beispielsweise einen ersten O-Ring, trägt und die erste Dichtung (34) in einem Dichtungsraum positioniert, der zwischen der ersten Zylinderendöffnung (8) und wahlweise der ersten oder der zweiten Endöffnung (4, 6) geformt ist.

9. Drucktank für Trinkwasser (1) nach einem der vorhergehenden Ansprüche, wobei eine Ventilverbindungsfassung (16), die mit dem Inneren (17) des Mantels (2) verbunden ist, nahe dem ersten Ende (10) an dem Mantel (2) angebracht ist.

10. Anlage (94, 194) zum Zuführen von Trinkwasser, **dadurch gekennzeichnet, dass** sie einen Drucktank für Trinkwasser (1) nach einem der vorhergehenden Ansprüche umfasst, der dafür konfiguriert ist, als ein Hydrophorentank in der Anlage zum Zuführen von Trinkwasser (94, 194) zu arbeiten.

11. Anlage (94) zum Zuführen von Trinkwasser, **dadurch gekennzeichnet, dass** sie einen Drucktank für Trinkwasser (1) nach einem der vorhergehenden Ansprüche 1 bis 9 umfasst, der dafür konfiguriert ist, als ein Filtertank in der Anlage zum Zuführen von Trinkwasser (94) zu arbeiten.

12. Satz zum Zusammenbauen eines Drucktanks für Trinkwasser (1), wobei der Drucktank zum Betreiben als ein Hydrophorentank konfigurierbar ist, wobei der Satz einen zylindrischen Mantel (2), eine erste Endsektion (4) und eine zweite Endsektion (6) aufweist, wobei der zylindrische Mantel (2) eine erste Zylinderendöffnung (8), die in einem ersten Ende (10) des Mantels (2) angeordnet ist, und eine zweite Zylinderendöffnung (12), die in einem entgegengesetzten Ende (14) des Mantels (2) angeordnet ist, aufweist, wobei die erste Endsektion (4) dafür angeordnet ist, abnehmbar an einer beliebigen von der ersten oder der zweiten Zylinderendöffnung (8, 12) angebracht zu werden, und wobei die zweite Endsektion (6) dafür angeordnet ist, abnehmbar an einer beliebigen von der zweiten oder der ersten Zylinderendöffnung (12, 8) angebracht ist zu werden, **dadurch gekennzeichnet, dass** zumindest die erste Endsektion (4) eine gekrümmte erste Mittelsektion (24) aufweist, deren Außendurchmesser (FYD) gleich dem Innendurchmesser (MID) des Mantels (2) oder geringer als derselbe ist, wobei in einer Transportkonfiguration die erste Endsektion (4) mit der Gesamtheit der ersten gekrümmten Mittelsektion (24) innerhalb des Mantels (2) angeordnet sein kann.

## Revendications

1. Réservoir sous pression pour l'eau potable (1) conçu pour fonctionner sous forme d'un réservoir hydrophore, ledit réservoir comportant une chemise cylindrique (2), une première section terminale (4), et une seconde section terminale (6), ladite chemise cylindrique (2) comportant une première ouverture terminale de cylindre (8) située à une première extrémité (10) de ladite chemise (2), et une seconde ouverture terminale de cylindre (12) située à une extrémité opposée (14) de ladite chemise (2), ladite première section terminale (4) étant montée de manière détachable sur l'une quelconque desdites première et seconde ouvertures terminales de cylindre (8,12), et ladite seconde section terminale (6) étant montée de manière détachable sur l'une quelconque desdites première et seconde ouvertures terminales de cylindre (8,12), **caractérisé en ce que** ladite au moins une première section terminale (4) comporte une première section centrale courbée (24) dont le diamètre extérieur (FYD) est inférieur ou égal au diamètre intérieur (MID) de ladite chemise (2), ladite première section terminale (4) pouvant être positionnée avec la totalité de ladite première section centrale courbée (24) à l'intérieur de ladite chemise (2) dans une configuration de transport.

2. Réservoir sous pression pour l'eau potable (1) selon la revendication 1, dans lequel ladite chemise cylindrique (2) comporte à sa dite première extrémité (10) une première bride de chemise (20) pointant vers l'extérieur, et à sa dite seconde extrémité (14) une seconde bride de chemise (22) pointant vers l'extérieur, et ladite première section terminale (4) comporte une première bride terminale (26) pointant vers l'extérieur, ladite bride étant adaptée auxdites première et seconde brides de chemise (20,22), et ladite seconde section terminale (6) comporte une seconde bride terminale (30) pointant vers l'extérieur, ladite bride étant adaptée auxdites première et seconde brides de chemise (20,22).

3. Réservoir sous pression pour l'eau potable (1) selon l'une quelconque des revendications précédentes, dans lequel ladite seconde section - garantir du papier blanc terminale (6) comporte une seconde section centrale courbée (28) dont le diamètre extérieur (AYD) est inférieur ou égale audit diamètre intérieur (MID) de ladite chemise (2), lesdites seconde et première sections terminales (4, 6) pouvant être placées avec l'ensemble de leurs dites sections centrales courbées respectives (24,28) à l'intérieur de ladite chemise (2) dans une configuration de transport.

4. Réservoir sous pression pour l'eau potable (1) selon l'une quelconque des revendications précédentes, comportant un premier dispositif de fixation (32) qui est conçu pour rattacher ladite première section terminale (4) sur l'une quelconque desdites première ou seconde ouvertures terminales (8,12) et un second dispositif de fixation (44) qui est conçu pour rattacher ladite seconde section terminale (6) sur l'une quelconque desdites première et seconde ouvertures terminales (8,12).

5. Réservoir sous pression pour l'eau potable (1) selon la revendication 4, dans lequel au moins un desdits premier et second dispositif de fixation (32,44) a une face interne en forme de V (78) et est conçu pour pousser, en utilisant ladite face interne (78), respectivement une première bride de chemise (20) pointant vers l'extérieur située sur ladite chemise (2) et une première ou seconde bride terminale (26,30) située sur lesdites première et seconde sections terminales (4, 6) l'une contre l'autre pour serrer un dispositif d'étanchéité (34), par exemple un joint torique, situé entre ladite première bride de chemise (20) et lesdites première et seconde brides terminales (26,30).

6. Réservoir sous pression pour l'eau potable (1) selon l'une quelconque des revendications 4 à 5, dans lequel au moins un desdits premier et second dispositifs de fixation comprend une bague de serrage (32,44) construite avec une résistance de nature à la faire céder et à perdre sa force d'étanchéité si la pression à l'intérieur du réservoir sous pression excède une valeur de sécurité prédéterminée.

7. Réservoir sous pression pour l'eau potable (1) selon l'une quelconque des revendications précédentes, ledit réservoir sous pression pour l'eau potable (1) comprenant en outre une première bague d'étanchéité (34) pour étanchéifier un espace de joint (76) entre ladite première ouverture terminale de cylindre (8) et en option ladite première ou seconde section terminale (4, 6), et une seconde bague d'étanchéité (46) pour étanchéifier un espace de joint (76) entre ladite seconde ouverture terminale de cylindre (12) et en option ladite première ou seconde section terminale (4, 6).

8. Réservoir sous pression pour l'eau potable (1) selon l'une quelconque des revendications précédentes, comprenant au moins un premier support de joint circulaire (36) qui se trouve à l'intérieur dudit réservoir sous pression pour l'eau potable (1) et qui, dans son extérieur (70), supporte un premier joint d'étanchéité (34), comme un premier joint torique, et positionne ledit premier joint d'étanchéité (34) dans un espace de joint formé entre ladite première ouverture terminale de cylindre (8) et en options lesdites première ou seconde ouvertures terminales (4, 6).

9. Réservoir sous pression pour l'eau potable (1) selon l'une quelconque des revendications précédentes, dans lequel une douille de connexion de valve (16), qui est connectée à l'intérieur (17) de ladite chemise (2), est montée sur ladite chemise (2) à proximité de ladite première extrémité (10).

10. Système (94,194) de fourniture d'eau potable, **caractérisé en ce qu'**il comprend un réservoir sous pression pour l'eau potable (1) selon l'une quelconque des revendications précédentes, qui est configuré pour fonctionner comme réservoir hydrophore dans ledit système pour fournir de l'eau potable (94,194).

11. Système (94) de fourniture d'eau potable, **caractérisé en ce qu'**il comprend un réservoir sous pression pour l'eau potable (1) selon l'une quelconque des revendications 1 à 9, qui est configuré pour fonctionner comme réservoir de filtration dans ledit système pour fournir de l'eau potable (94).

12. Kit d'assemblage d'un réservoir sous pression pour l'eau potable (1), ledit réservoir sous pression étant configurable pour fonctionner comme réservoir hydrophore, ledit kit comprenant une chemise cylindrique (2), une première section terminale (4), et une seconde section terminale (6), ladite chemise cylindrique (2) comportant une première ouverture terminale de cylindre (8) située dans une première extrémité (10) de ladite chemise (2), et une seconde ouverture terminale de cylindre (12) située dans une extrémité opposée (14) de ladite chemise (2), ladite première section terminale (4) étant conçue pour être montée de manière détachable sur l'une quelconque desdites première ou seconde ouvertures terminales de cylindre (8,12), et ladite seconde section terminale (6) étant conçue pour être montée de manière détachable sur l'une quelconque desdites seconde ou première ouvertures terminales de cylindre (12, 8), **caractérisé en ce qu'**au moins ladite première section terminale (4) comporte une première section centrale courbée (24) dont le diamètre extérieur (FYD) est inférieur ou égal au diamètre intérieur (MID) de ladite chemise (2), ladite première section terminale (4) pouvant être positionnée avec la totalité de ladite première section centrale courbée (24) à l'intérieur de ladite chemise (2) dans une configuration de transport.
